# DEMANDE DE BREVET EUROPEEN

(11) **EP 1 182 878 A1**
(43) Date de publication de la demande: **27.02.2002**
(21) Numéro de dépôt: 01203100.1
(22) Date de dépôt: 14.08.2001
(51) Int. Cl.: H04N 7/24

(54) **Système de communication, émetteur, récepteur, méthode utilisant un descripteur de stockage de données**

(30) Priorité: 22.08.2000 FR 0010802
(71) Demandeur: Koninklijke Philips Electronics N.V., 5621 BA Eindhoven (NL)
(72) Inventeur: Herrmann, Laurent, 75008 Paris (FR)
(74) Mandataire: de la Fouchardière, Marie-Noelle

(57) **Abrégé**

L'invention concerne un système de communication entre un émetteur et un récepteur, l'émetteur transmettant au récepteur via un canal de communication des données numériques. Un tel système de communication prévoit l'identification des données susceptibles d'une utilisation multiple au niveau de l'émetteur à l'aide de descripteurs de données insérés dans le flux de données envoyées de l'émetteur vers le récepteur. Le flux de données reçues au niveau du récepteur est alors analysé afin de détecter la présence de descripteurs de données reflétant la présence de données multi-utilisation. Chaque fois qu'un tel descripteur est détecté, celui-ci est stocké localement au niveau du récepteur conjointement avec les données auxquelles il se rattache. Les données multi-utilisation ainsi stockées peuvent dès lors être utilisées non seulement dès leur réception au niveau du récepteur, mais aussi ultérieurement sans qu'il soit nécessaire d'en faire la demande à l'émetteur.

## Description

L'invention concerne un système de communication entre un émetteur et un récepteur, l'émetteur transmettant au récepteur via un canal de communication des données numériques et des descripteurs de données.

Elle a de nombreuses applications dans les systèmes de communication de données multimédias mettant en oeuvre une architecture point à point, ou plus généralement une architecture client/serveur.

Le brevet PCT publié sous le numéro WO 98/03016 décrit une méthode et un système pour envoyer sur un canal de communication unidirectionnel des données numériques à partir d'un émetteur vers un récepteur. Le récepteur reçoit des données numériques qui sont collectées et stockées localement en se basant sur des critères reflétant le profil d'un utilisateur, les données ainsi stockées pouvant être ultérieurement utilisées par l'utilisateur au niveau du récepteur.

La méthode de stockage des données envoyées par l'émetteur mise en oeuvre dans le document de l'art antérieur présente un certain nombre de limitations.

Tout d'abord, la sélection des données stockées au niveau du récepteur nécessite l'utilisation d'un profil utilisateur au niveau du récepteur permettant de ne retenir que des données répondant aux différents critères contenus dans ce profil. Dans le cas où le récepteur est utilisé par des utilisateurs différents, il est a priori nécessaire de disposer d'autant de profils que d'utilisateurs, ce qui d'une part oblige à avoir suffisamment d'espace mémoire pour le stockage des profils, et d'autre part nécessite des moyens permettant de changer aisément de profil utilisateur. Cette méthode de sélection, peu souple d'utilisation, implique donc la mise en oeuvre de moyens coûteux.

D'autre part, l'utilisation d'un profil utilisateur pour la sélection des données est limitée. En effet, un profil utilisateur ne contenant jamais une représentation exhaustive des goûts de l'utilisateur mais contenant plutôt des préférences générales, il n'est pas improbable que certaines données reçues au niveau du récepteur et correspondant aux goûts de l'utilisateur ne soient pas sélectionnées pour être stockées, faute d'avoir été prises en considération par le profil utilisateur. Dans ce cas, chaque fois que l'utilisateur désirera consulter une donnée non stockée localement suscitant son intérêt, celle-ci devra être envoyée par l'émetteur, au risque de saturer le canal de communication et de ne pas en disposer immédiatement.

L'invention a pour but de remédier dans une large mesure à ces limitations en proposant un système de communication, un récepteur, ainsi qu'une méthode, ayant pour but d'associer des descripteurs aux données envoyées par l'émetteur afin d'identifier au niveau du récepteur les données à stocker susceptibles d'une utilisation multiple, d'une façon plus fiable et moins coûteuse que celle décrite dans le document de l'art antérieur.

Cette invention peut de façon avantageuse être utilisée si les données à envoyer par l'émetteur correspondent à des données de type texte, audio (par exemple codées selon les normes audio MPEG-2 ou MP3), ou vidéo (par exemple codées selon les normes vidéo MPEG-2, MPEG-4 ou H.263).

A cet effet, la présente invention est remarquable en ce que l'émetteur comprend :
- des moyens d'analyse des données numériques pour identifier des données dites multi-utilisation susceptibles d'être utilisées plusieurs fois au niveau du récepteur, et des données dites mono-utilisation susceptibles d'être utilisées une seule fois dès leur réception au niveau du récepteur,
- des moyens de création de descripteurs de données pour décrire chaque donnée multi-utilisation précédemment identifiée, lesdits descripteurs comprenant un ensemble de champs caractéristiques,
- des moyens d'insertion pour insérer les descripteurs de données dans l'ensemble des données multi-utilisation, chaque donnée multi-utilisation étant ainsi associée à un descripteur de données.

La présente invention est aussi remarquable en ce que le récepteur comprend :
- des moyens d'analyse des données reçues, pour détecter la présence de descripteurs de données multi-utilisation et ainsi identifier des données multi-utilisation et des données mono-utilisation,
- des moyens de stockage des données multi-utilisation détectées et de leurs descripteurs associés initialement reçus,
- des moyens pour composer le contenu d'une application à partir de données mono-utilisation et de données multi-utilisation précédemment stockées, une même donnée ayant une utilisation multiple dans la composition dudit contenu étant alors directement récupérée à chaque utilisation par des moyens de récupération depuis lesdits moyens de stockage.

Un tel système de communication prévoit, contrairement au document de l'art antérieur où la sélection des données susceptibles d'une utilisation multiple est faite au niveau du récepteur, l'identification des données multi-utilisation au niveau de l'émetteur à l'aide de descripteurs de données insérés dans le flux de données envoyées de l'émetteur vers le récepteur. Le flux de données reçues au niveau du récepteur est alors analysé afin de détecter la présence de descripteurs de données reflétant la présence de données multi-utilisation. Chaque fois qu'un tel descripteur est détecté, celui-ci est stocké localement au niveau du récepteur conjointement avec les données auxquelles il se rattache. Les données multi-utilisation ainsi stockées peuvent dès lors être utilisées non seulement dès leur réception au niveau du récepteur, mais aussi ultérieurement sans qu'il soit nécessaire d'en faire la demande à l'émetteur.

Selon une caractéristique supplémentaire de l'invention, une mise à jour des descripteurs et des données correspondantes, tous les deux stockés localement, est effectuée en permanence afin non seulement de tenir compte des capacités courantes de traitement du récepteur, mais aussi des différents paramètres temporels propres à chaque donnée multi-utilisation stockée.

Ces aspects de l'invention ainsi que d'autres aspects plus détaillés apparaîtront plus clairement grâce à la description suivante, faite en regard des dessins ci-annexés, le tout donné à titre d'exemple non limitatif, dans lesquels :
La figure 1 est un schéma bloc d'un exemple de système de communication comprenant un émetteur et un récepteur selon l'invention,
La figure 2 montre la structure des descripteurs de données selon l'invention,
La figure 3 montre à titre d'exemple la structure d'un premier descripteur de données selon l'invention,
La figure 4 montre à titre d'exemple la structure d'un second descripteur de données selon l'invention,
La figure 5 montre à titre d'exemple la structure d'un troisième descripteur de données selon l'invention,
La figure 6 est un schéma décrivant le fonctionnement détaillé d'un récepteur selon l'invention,
La figure 7 représente un système de communication selon l'invention entre un serveur et un ensemble de terminaux.

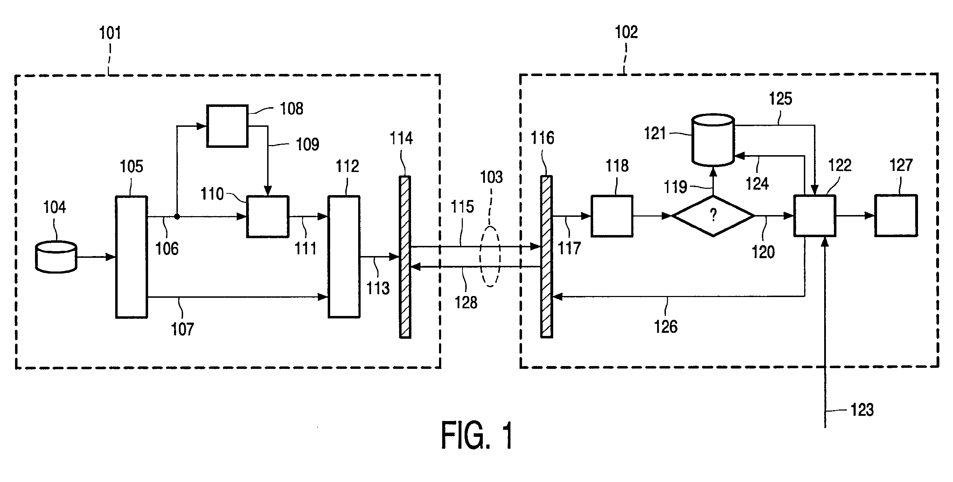

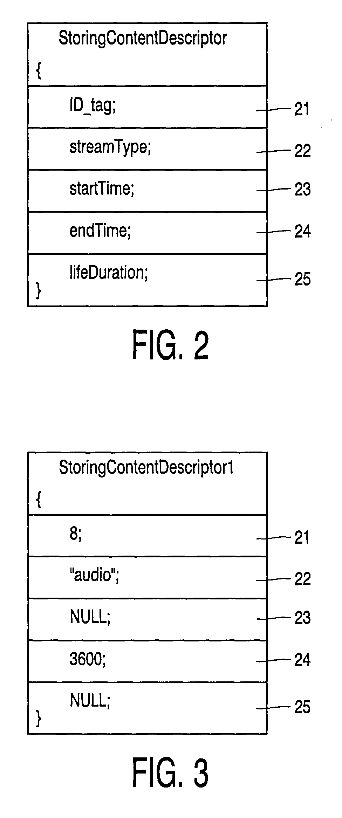

La figure 1 décrit un système de communication selon l'invention comprenant un émetteur 101 et un récepteur 102 communiquant via un canal de communication 103. L'émetteur comporte :
- une source de données 104 générant aussi bien des données diverses telles que des données de types audio, vidéo, texte ou image.
- des moyens d'analyse 105 pour analyser chacune des données 104 et les classer en deux catégories, d'une part les données 106 dites multi-utilisation susceptibles d'une utilisation multiple au niveau du récepteur 102, et d'autre part les données 107 dites mono-utilisation qui ne seront a priori utilisées qu'une seule fois au niveau du récepteur. Les données multi-utilisation sont par exemple détectées après une sélection a priori dépendant du type de ces données multi-utilisation, ou d'autres critères. Ce classement peut par exemple être effectué en anticipant sur les demandes d'un utilisateur situé au niveau du récepteur 102. Par exemple, si les données 104 concernent des bandes-annonces vidéo relatives à des programmes de télévision, il est fort probable que ces données seront utilisées plusieurs fois au niveau du récepteur, d'où leur classement dans les données 106. Par contre, si les données 104 sont relatives à un contenu très spécifique peu probable d'être utilisé plusieurs fois au niveau du récepteur, elles seront classées parmi les données 107.
- des moyens de création 108 de descripteurs de données multi-utilisation. Pour chacune des données multi-utilisation 106, le bloc fonctionnel 108 crée un descripteur de données à champs multiples 109, chaque champ étant caractéristique de la donnée considérée. Ce descripteur se comporte non seulement comme un identificateur de données multi-utilisation, mais aussi caractérise celles-ci afin notamment d'en faciliter leur manipulation et leur gestion au niveau du récepteur.
- des moyens d'insertion 110 pour insérer chaque descripteur 109 dans le flux des données 106. Chaque donnée multi-utilisation 106 est ainsi associée à son descripteur 109, par exemple en concaténant les données 106 aux données 109. Le nouveau flux de données 111 ainsi généré à la sortie de l'inserteur 110 est donc constitué par une succession de couples de données descripteur/donnée multi-utilisation.
- une unité de multiplexage 112 des données 111 et 107 qui sont multiplexées pour délivrer le flux de données 113 comprenant alors une succession de données mono-utilisation et de couples de données descripteur/donnée multi-utilisation. Ce multiplexage peut par exemple être fait suivant la norme "MPEG-2 Transport Stream".
- une couche transport 114 pour interfacer l'émetteur avec le canal de communication 103, et pour délivrer à partir des données multiplexées 113, un flux de données 115 envoyées sur le canal de communication 103 en direction du récepteur 102.
Le récepteur 102 comporte :
- une couche transport 116 recevant le flux de données 115 et générant le flux de données 117,
- des moyens d'analyse 118 ayant pour but de détecter dans le flux de données 117 les données multi-utilisation 119 et les données mono-utilisation 120. Pour cela, les descripteurs de données 109 concaténés aux données multi-utilisation au niveau de l'émetteur sont détectés : si un tel descripteur présent dans le flux de données 117 est effectivement détecté par les moyens d'analyse 118, cela révèle la présence d'une donnée multi-utilisation à laquelle il se rattache. Tant qu'aucun descripteur de données n'est détecté, toutes les données contenues dans le flux de données 117 sont assimilées à des données mono-utilisation.
- des moyens de stockage 121 des données multi-utilisation et de leur descripteur associé. A titre d'exemple, les couples de données descripteur/donnée multi-utilisation peuvent être stockées sur un disque dur ou en mémoire. Il peut également être envisagé de stocker séparément les données multi-utilisation sur un premier moyen de stockage, et les descripteurs correspondant sur un deuxième moyen de stockage.
- des moyens de composition 122 d'un contenu pour une application à partir des données multi-utilisation 119 stockées et des données mono-utilisation 120. A titre d'exemple, les moyens de composition peuvent correspondre à un navigateur pour données multimédias à partir duquel un utilisateur a la possibilité d'interagir via l'accès 123 pour modifier le contenu de l'application et demander des données spécifiques qui l'intéressent. Pour chaque requête 123 traduisant le désir d'un utilisateur de consulter une donnée particulière, une recherche est effectuée via l'accès 124 parmi toutes les données multi-utilisation précédemment stockées, afin de vérifier que cette donnée particulière n'a pas déjà été stockée. S'il s'avère que cette donnée a été précédemment stockée, celle-ci est directement envoyée à l'unité de composition 122 via le chemin 125 pour être prise en compte dans la composition du nouveau contenu, sans qu'il ait été nécessaire de l'envoyer depuis l'émetteur. Dans le cas où cette donnée particulière ne figure pas parmi les données stockées en 121 et que le canal de communication 103 comporte une voie de retour 128 entre le récepteur 102 et l'émetteur 101, une requête 126 est transmise via la couche transport 116 à l'émetteur, puis via la voie de retour 128 vers ledit émetteur 101, ce dernier envoyant alors au récepteur la donnée manquante via la voie 115 afin qu'elle soit utilisée dans la composition du contenu. Dans le cas où cette donnée particulière ne figure pas parmi les données stockées en 121 et que le canal de communication 103 ne comporte pas de voie de retour 128, la demande de l'utilisateur ne peut être satisfaite. Chaque fois qu'un nouveau contenu faisant appel à des données mono-utilisation est créé, celles-ci sont utilisées directement après leur détection dans le flux de données 117, aucun stockage ne leur étant réservé contrairement aux données multi-utilisation qui sont tout d'abord stockées dans 121 puis utilisées dans la composition du contenu. Les données multi-utilisation étant systématiquement stockées, elle sont dès lors facilement disponibles à tout moment si l'unité de composition 122 en a l'utilité lors de la création d'un nouveau contenu. Cela permet non seulement de ne pas effectuer des demandes de données à l'émetteur 101 qui pourraient surcharger le canal de communication 103, mais aussi d'améliorer la disponibilité des données au niveau du récepteur en conférant à ce dernier une grande autonomie de fonctionnement. Afin d'éviter de stocker des données multi-utilisation inutiles et encombrantes, l'invention prévoit des moyens de mise à jour de ces données qui seront détaillés au regard de la figure 3.
- des moyens de visualisation 127 d'un contenu de données multimédias, tel qu'un écran vidéo permettant à un utilisateur de voir et interagir sur un contenu composé par le navigateur 122.

La figure 2 montre la structure des descripteurs de données selon l'invention. Ces descripteurs, comme il a été mentionné précédemment, sont insérés au niveau de l'émetteur avec chaque donnée dite multi-utilisation susceptible d'être utilisée plusieurs fois au niveau du récepteur. Ces descripteurs servent d'une part à identifier les données multi-utilisation reçues par le récepteur afin qu'il les stocke localement, et d'autre part à informer le récepteur des caractéristiques de ces données multi-utilisation à l'aide de plusieurs champs afin que le récepteur puisse effectuer des opérations de mise à jour des données multi-utilisation stockées.

La structure du descripteur de données selon l'invention donnée à titre d'exemple comporte cinq champs :
- le champ 21 correspond à un identificateur par exemple numérique permettant de différencier les descripteurs entre eux et ainsi éviter toute confusion,
- le champ 22 renseigne sur le type de données auxquelles se rattache le descripteur. Par exemple, ce champ peut indiquer au récepteur qu'il s'agit de données de type audio, vidéo ou bien de type image. Dans le cas où le récepteur n'est pas en mesure de traiter un certain type d'information, par exemple si le format vidéo ne peut pas être décodé par manque de moyens de traitement correspondants, cette information renseignée par le champ 22 s'avère utile puisque la donnée correspondante ne sera pas stockée pour ne pas utiliser inutilement l'espace de stockage du récepteur.
- le champ 23 est une valeur temporelle prise par rapport à une référence temporelle telle qu'une horloge locale située au niveau du récepteur. Cette valeur est une date de début indiquant au récepteur à partir de quel moment la donnée à laquelle se rattache le descripteur pourra être utilisée. Supposons le cas où des données multi-utilisation correspondant par exemple à des bandes-annonces de films vidéos programmés pour une semaine entière ont été stockées sur le récepteur, un utilisateur pouvant consulter ces données à l'aide d'un guide de programme électronique (ou EPG, de l'anglais Electronic Program Guide). Si l'EPG ne peut présenter que les données vidéo du jour courant, à cause de limitations matérielles par exemple, seules les données vidéo dont les champs 23 des descripteurs associés ont une date correspondant au jour courant seront rendues actives et donc consultables. Sinon, les données pour lesquelles le champ 23 de leur descripteur associé est une date correspondant aux jours suivant ne seront pas rendues actives. Concrètement, une donnée vidéo sera rendue active en la décodant de sorte qu'elle soit rapidement accessible et utilisable chaque fois que l'utilisateur désirera la consulter.
- le champ 24 est une valeur temporelle prise par rapport à une référence temporelle telle qu'une horloge locale située au niveau du récepteur. Cette valeur est une date de fin indiquant au récepteur à partir de quel moment la donnée à laquelle se rattache le descripteur n'aura plus lieu d'être stockée sur le récepteur. Si l'on reprend l'exemple précédent des données multi-utilisation correspondant à des bandes-annonces de film, le champ 24 de chaque descripteur correspondra à la date de fin du film auquel il se rattache. Autrement dit, le champ 24 correspond à la date de fin de validité des données auxquelles il se rattache.
- le champ 25 est une valeur temporelle correspondant à la durée maximale de stockage des données sur le récepteur. Ce champ permet une gestion des données dans le temps différente de celle menée avec les champs 23 et 24. Ce champ 25 s'applique plus particulièrement aux données multi-utilisation n'ayant pas de référence temporelle absolue. A partir du moment où la donnée multi-utilisation est reçue sur le récepteur, la durée de stockage est calculée et comparée à celle du champ 25 pour respecter la durée maximale de stockage.

Les figures 3, 4 et 5 donnent des exemples de descripteurs selon l'invention pour lesquels les différents champs ont été remplis.

La figure 3 montre la structure d'un descripteur relatif à une donnée de type audio. Ce descripteur selon l'invention est identifié par le chiffre 8 et se rapporte à une donnée valide jusqu'à la date 3600, cette date absolue s'exprimant dans l'unité de temps courante du récepteur, et par rapport à une référence temporelle de ce même récepteur.

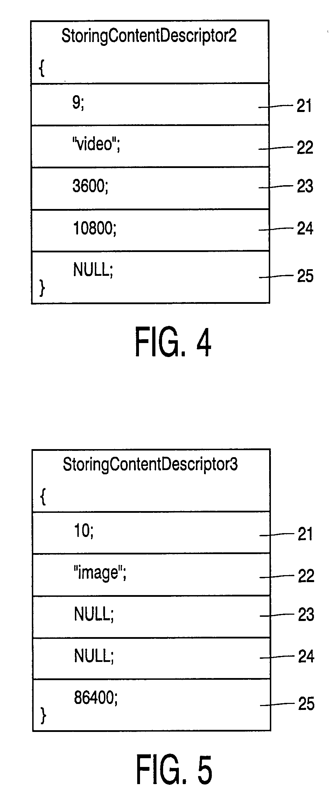

La figure 4 montre la structure d'un descripteur relatif à une donnée de type vidéo. Ce descripteur selon l'invention est identifié par le chiffre 9 et se rapporte à une donnée valide entre les dates 3600 et 10800, ces dates absolues s'exprimant dans l'unité de temps courante du récepteur, et par rapport à une référence temporelle de ce même récepteur.

La figure 5 montre la structure d'un descripteur relatif à une donnée de type image. Ce descripteur selon l'invention est identifié par le chiffre 10 et se rapporte à une donnée valide sur une durée de 86400 à compter de sa réception sur le récepteur, cette date absolue s'exprimant dans l'unité de temps courante du récepteur, et par rapport à une référence temporelle de ce même récepteur.

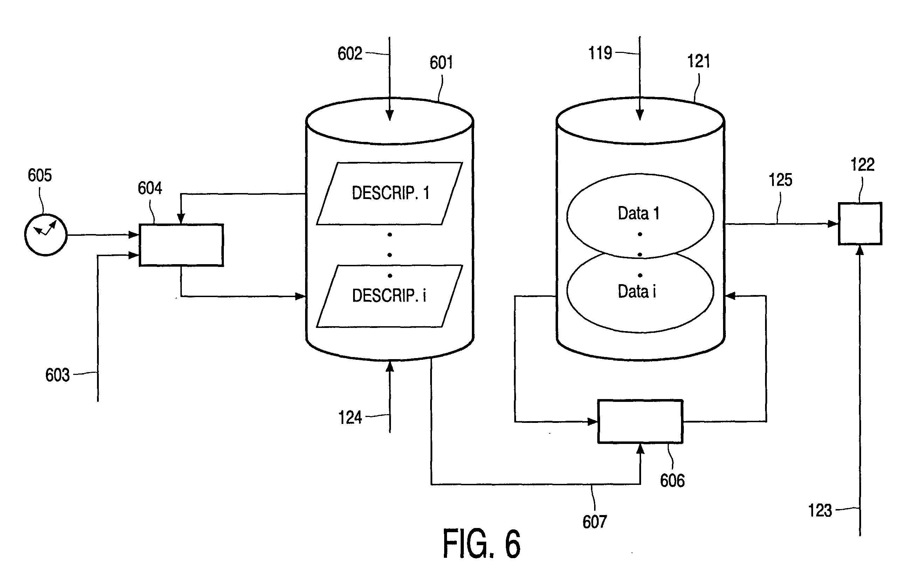

La figure 6 est un schéma décrivant le fonctionnement détaillé d'un récepteur selon l'invention et conforme à celui décrit à la figure 1. Ce schéma concerne plus particulièrement le système de mise à jour des données multi-utilisation et de leurs descripteurs associés stockés localement en vue d'une utilisation ultérieure. Comme mentionné précédemment, les données accompagnées d'un descripteur de données dont la structure est similaire à celle de la figure 2 sont assimilées à des données dites multi-utilisation susceptibles d'être utilisées plusieurs fois au niveau du récepteur par un utilisateur. Ces données multi-utilisation 119 sont stockées localement sur le récepteur sur l'unité de stockage 121, tout comme leurs descripteurs associés 602 qui sont stockés sur l'unité de stockage 601.

Dès leur stockage initial dans l'unité 601, les descripteurs sont analysés via leur différents champs pour vérifier que les données auxquelles ils se rattachent sont compatibles avec les capacités 603 du récepteur, et que ces données peuvent effectivement être exploitées au niveau du récepteur. Par exemple, les capacités 603 peuvent être localement stockées sur un moyen de stockage au niveau du récepteur. Pour cela, des moyens de mise à jour 604 contrôlent et vérifient la compatibilité des champs 22 de chaque descripteur aux capacités 603 du récepteur. Par exemple, si le récepteur ne peut pas traiter des données de type vidéo, les données 119 et leur descripteur associé 602 de type vidéo ne seront pas stockés, ou alors seront stockés et immédiatement effacées des unités 601 et 121.

Après vérification de la compatibilité des données multi-utilisation aux capacités de traitement du récepteur, une mise à jour des données 119 est périodiquement effectuée par les moyens de mise à jour 604. Cette mise à jour a notamment pour but d'effacer les données 119 qui sont jugées inutiles, ou de les rendre actives afin qu'elles soient rapidement disponibles et facilement utilisables pour la création d'un contenu multimédia par exemple. Pour cela, les champs temporels 23, 24 et 25 des descripteurs 602 sont périodiquement comparés à une horloge locale 605 propre au récepteur pour s'assurer que la date de fin de validité correspondant aux champs 24 n'est pas atteinte ou que la durée de validité correspondant aux champs 25 n'est pas écoulée, ce qui conduirait dans le cas contraire à la suppression des descripteurs correspondants et de leur données rattachées. De la même façon, la date de début de validité correspondant au champ 23 est périodiquement comparé à l'horloge 605 afin de préparer les données qui sont susceptibles d'être utilisées. Pour cela, il est prévu des moyens 606 permettant de préparer les données stockées 119, ce dispositif de préparation étant piloté via des ordres de décisions 607 générés suite à la comparaison du champ 23 et de l'horloge 605. Par exemple, si une donnée multi-utilisation 119 correspond à une vidéo comprimée pouvant être consultée à partir de la date de validité t1, un ordre de préparation 607 sera généré quelques temps avant cette date t1 de façon à ce que cette donnée vidéo soit décomprimée par le dispositif de préparation 606, la vidéo décomprimée remplaçant alors la vidéo comprimée sur l'unité de stockage 121. Si un utilisateur interagissant via la requête 123 avec le contenu de l'application créé au niveau du compositeur 122 désire consulter une donnée particulière, et si cette donnée est reconnue comme étant une donnée ayant déjà été stockée localement, l'ordre 124 est donné de délivrer cette donnée via le chemin 125 au compositeur de contenu 122. Si cette donnée est de type vidéo, il est donc intéressant qu'elle soit rapidement disponible, donc décomprimée.

Lorsqu'un utilisateur souhaite consulter une donnée particulière, tous les moyens peuvent être mis en oeuvre pour déterminer si cette donnée correspond à une donnée localement stockée ou non. En effet, il se peut qu'un utilisateur fasse appel à une donnée multi-utilisation effacée des unités de stockage 601 et 121. D'une façon générale, il suffit de rechercher parmi l'ensemble des descripteurs 602 s'il existe un descripteur identique à celui de la donnée désirée. Si c'est le cas, la donnée est extraite de l'unité de stockage, sinon la requête de l'utilisateur n'est pas honorée. Par exemple, des moyens de comparaison peuvent être utilisés pour comparer le descripteur d'une donnée particulière à l'ensemble des descripteurs de données précédemment stockés sur le récepteur, pour en déduire si ladite donnée particulière peut être récupérée.

Dans cette figure 6, seul le traitement des données mufti-utilisation est décrit, les données mono-utilisation étant traitées classiquement au fur et à mesure de leur arrivée sur le récepteur en fonction de ses capacités de traitement.

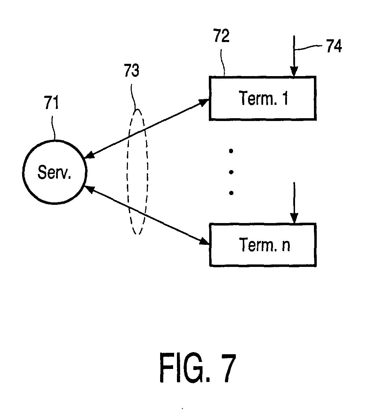

La figure 7 représente un exemple de système de communication selon l'invention. Ce système correspond par exemple a un système utilisé dans un contexte de type diffusion (en anglais "broadcast") entre un serveur (i.e. l'émetteur) et un ensemble de clients (i.e. récepteurs). Ce système se compose d'un serveur 71 communiquant avec n terminaux 72 via un ensemble de n canaux de communication 73. Le serveur joue le rôle d'un émetteur tel que décrit précédemment en envoyant des données mono-utilisation et des données multi-utilisation accompagnées de leur descripteur de données. Dans une application dite distribuée, les mêmes données sont envoyées à l'ensemble des terminaux 72. Ces derniers jouent le rôle de récepteurs tels que précédemment décrits en stockant localement toute donnée multi-utilisation identifiée dans le flux de données transmises via les canaux 73. Chaque terminal étant en mesure de recevoir des requêtes de données venant d'un utilisateur via l'accès 74, les requêtes faisant référence à des données multi-utilisation stockées localement sont honorées en délivrant les données correspondantes depuis les unités de stockage situées sur le terminal concerné.

Ainsi ont été décrits et illustrés un système de communication entre un émetteur et un récepteur permettant d'identifier et de stocker au niveau du récepteur des données susceptibles d'être utilisées plusieurs fois par une application. Bien entendu, de nombreuses variantes pourront être apportées aux modes de réalisation décrits sans sortir du cadre de l'invention. Notamment, il pourra être envisagé d'utiliser un profil utilisateur conjointement avec les moyens de mise à jour situés sur le récepteur, de façon à ne retenir que certaines données multi-utilisation. De plus, des champs additionnels aux descripteurs de données multi-utilisation pourront être ajoutés afin de caractériser plus précisément les données auxquelles ils se rattachent. En particulier, les descripteurs précédemment décrits selon l'invention peuvent être utilisés de façon avantageuse dans une norme dédiée à la description de données, notamment dans la norme MPEG-7.

Concernant la mise en oeuvre sur le plan matériel d'un tel système de communication, il sera fait appel tant au niveau de l'émetteur que du récepteur à des processeurs de signaux, ces dits processeurs effectuant les différentes manipulations décrites précédemment sur les flux de données numériques en exécutant des jeux d'instructions stockées en mémoire.

## Revendications

1. Système de communication entre un émetteur et un récepteur, l'émetteur transmettant au récepteur via un canal de communication des données numériques et des descripteurs de données, système de communication **caractérisé en ce que** l'émetteur comprend :
a) des moyens d'analyse des données numériques pour identifier des données dites multi-utilisation susceptibles d'être utilisées plusieurs fois au niveau du récepteur, et des données dites mono-utilisation susceptibles d'être utilisées une seule fois dès leur réception au niveau du récepteur,
b) des moyens de création de descripteurs de données pour décrire chaque donnée multi-utilisation précédemment identifiée, lesdits descripteurs comprenant un ensemble de champs caractéristiques,
c) des moyens d'insertion pour insérer les descripteurs de données dans l'ensemble des données multi-utilisation, chaque donnée multi-utilisation étant ainsi associée à un descripteur de données,
**et en ce que** le récepteur comprend :
d) des moyens d'analyse des données reçues, pour détecter la présence de descripteurs de données multi-utilisation et ainsi identifier des données multi-utilisation et des données mono-utilisation,
e) des moyens de stockage des données multi-utilisation détectées et de leurs descripteurs associés initialement reçus,
f) des moyens pour composer le contenu d'une application à partir de données mono-utilisation et de données multi-utilisation précédemment stockées, une même donnée ayant une utilisation multiple dans la composition dudit contenu étant alors directement récupérée à chaque utilisation par des moyens de récupération depuis lesdits moyens de stockage.

2. Système de communication selon la revendication 1, **caractérisé en ce que** le récepteur comprend des moyens de mise à jour des descripteurs et des données multi-utilisation initialement reçus et stockés dans lesdits moyens de stockage, lesdits moyens de mise à jour tenant compte notamment des capacités du récepteur à exploiter le contenu des données multi-utilisation auxquelles se rattachent lesdits descripteurs, et des différents paramètres temporels contenus dans chaque descripteur relativement à une horloge locale.

3. Système de communication selon la revendication 1 **caractérisé en ce que** chaque descripteur de données multi-utilisation comprend un ensemble de champs correspondant notamment à un code d'identification permettant de différencier le descripteur des autres descripteurs, au type des données auxquelles le descripteur est rattaché, à une date de début et à une date de fin définissant une fenêtre temporelle d'utilisation des données associées au descripteur, ainsi qu'à une durée d'utilisation des données associées au descripteur.

4. Récepteur pour recevoir des données numériques **caractérisé en ce qu**'il comprend :
a) des moyens d'analyse des données reçues, pour détecter la présence de descripteurs de données multi-utilisation et ainsi identifier des données multi-utilisation et des données mono-utilisation,
b) des moyens de stockage des données multi-utilisation détectées et de leurs descripteurs associés initialement reçus,
c) des moyens pour composer le contenu d'une application à partir de données mono-utilisation et de données multi-utilisation précédemment stockées, une même donnée ayant une utilisation multiple dans la composition dudit contenu étant alors directement récupérée à chaque utilisation par des moyens de récupération depuis lesdits moyens de stockage.

5. Récepteur selon la revendication 4, **caractérisé en ce qu'**il comprend des moyens de mise à jour des descripteurs et des données multi-utilisation initialement reçus et stockés dans lesdits moyens de stockage, lesdits moyens de mise à jour tenant compte notamment des capacités du récepteur à exploiter le contenu des données multi-utilisation auxquelles se rattachent lesdits descripteurs, et des différents paramètres temporels contenus dans chaque descripteur relativement à une horloge locale.

6. Emetteur pour émettre des données numériques et des descripteurs de données sur un canal de communication, **caractérisé en ce que** qu'il comprend :
a) des moyens d'analyse des données numériques pour identifier des données dites multi-utilisation susceptibles d'être utilisées plusieurs fois au niveau du récepteur, et des données dites mono-utilisation susceptibles d'être utilisées une seule fois dès leur réception au niveau du récepteur,
b) des moyens de création de descripteurs de données pour décrire chaque donnée multi-utilisation précédemment identifiée, lesdits descripteurs comprenant un ensemble de champs caractéristiques,
c) des moyens d'insertion pour insérer les descripteurs de données dans l'ensemble des données multi-utilisation, chaque donnée multi-utilisation étant ainsi associée à un descripteur de données.

7. Signal composé de données numériques associées à des descripteurs, signal **caractérisé en ce que** chaque descripteur de données comprend un ensemble de champs correspondant notamment à un code d'identification permettant de différencier le descripteur des autres descripteurs, au type des données auxquelles le descripteur est rattaché, à une date de début et à une date de fin définissant une fenêtre temporelle d'utilisation des données associées au descripteur, ainsi qu'à une durée d'utilisation des données associées au descripteur.

8. Méthode de description et de reconnaissance de données envoyées d'un émetteur vers un récepteur via un canal de communication, l'émetteur transmettant au récepteur des données numériques et des descripteurs de données, méthode **caractérisée en ce que** l'émission des données comprend :
a) une étape d'analyse des données numériques pour identifier des données dites multi-utilisation susceptibles d'être utilisées plusieurs fois au niveau du récepteur, et des données dites mono-utilisation susceptibles d'être utilisées une seule fois dès leur réception au niveau du récepteur,
b) une étape de création de descripteurs de données pour décrire chaque donnée multi-utilisation précédemment identifiée, lesdits descripteurs comprenant un ensemble de champs caractéristiques,
c) une étape d'insertion pour insérer les descripteurs de données dans l'ensemble des données multi-utilisation, chaque donnée multi-utilisation étant ainsi associée à un descripteur de données,
**et en ce que** la réception des données comprend :
d) une étape d'analyse des données reçues, pour détecter la présence de descripteurs de données multi-utilisation et ainsi identifier des données multi-utilisation et des données mono-utilisation,
e) une étape de stockage des données multi-utilisation détectées et de leurs descripteurs associés initialement reçus,
f) une étape de composition du contenu d'une application à partir de données mono-utilisation et de données multi-utilisation précédemment stockées, une même donnée ayant une utilisation multiple dans la composition dudit contenu étant alors directement récupérée à chaque utilisation par des moyens de récupération depuis lesdits moyens de stockage.

9. Système de communication selon la revendication 1 entre un serveur jouant le rôle d'émetteur et un terminal jouant le rôle de récepteur, pour transmettre des données numériques codées suivant la norme MPEG-4.

10. Support de programme d'ordinateur pour terminal de communication, ledit programme d'ordinateur comprenant une suite d'instructions qui, lorsqu'elles sont chargées dans le terminal de communication, permettent audit terminal de communication d'exécuter la méthode de reconnaissance des données multi-utilisation selon la revendication 8.
